# EUROPÄISCHE PATENTSCHRIFT

(11) **EP 2 760 659 B1**
(45) Veröffentlichungstag und Bekanntmachung des Hinweises auf die Patenterteilung: **22.04.2020**
(21) Anmeldenummer: 12770421.1
(22) Anmeldetag: 21.09.2012
(51) Int. Cl.: B29C 48/82, B29C 48/25, B29C 48/92, B29C 48/40

(54) **EXTRUDER MIT KÜHLVORRICHTUNG**
EXTRUDER WITH A COOLING DEVICE
EXTRUDEUR AVEC UN DISPOSITIF DE REFROIDISSEMENT

(30) Priorität: 30.09.2011 DE 102011114576
(43) Veröffentlichungstag der Anmeldung: 06.08.2014
(73) Patentinhaber: Thermo Electron (Karlsruhe) GmbH, 76227 Karlsruhe (DE)
(72) Erfinder: ROBERTS, Peter, Stone Staffordshire ST15 8ZB (GB); WEBER, Ralf, 76149 Karlsruhe (DE)
(74) Vertreter: Lichti - Patentanwälte Partnerschaft mbB
(86) Internationale Anmeldenummer: PCT/EP2012/003948
(87) Internationale Veröffentlichungsnummer: WO 2013/045058

(56) Entgegenhaltungen:
- EP-A1- 0 021 278
- EP-A1- 1 637 234
- EP-A1- 2 266 777
- EP-A2- 1 132 192
- EP-A2- 1 772 246
- WO-A1-2005/102664
- WO-A1-2010/004595
- CN-A- 102 039 662
- DE-A1- 2 232 930
- DE-U1-202005 003 920
- JP-A- 2002 361 684
- US-A- 3 369 594
- US-A- 4 102 958
- US-A1- 2011 221 088

## Beschreibung

Die Erfindung betrifft einen Extruder mit einem Extruder-Gehäuse, in dem ein Förderkanal für ein zu extrudierendes Medium ausgebildet ist, in dem zumindest eine Förderschnecke angeordnet ist, mit einer Kühlvorrichtung für das Extruder-Gehäuse, die zumindest eine im oder am Extruder-Gehäuse ausgebildete Kühlleitung aufweist, die von einem Kühlfluid durchströmt ist, und mit einer Elektronik-Vorrichtung zur Steuerung und/oder Regelung der Betriebsstände des Extruders, die in einem Elektronik-Gehäuse aufgenommen ist.

Ein Extruder ist eine Fördervorrichtung, die mittels eines Schneckenförderers ein festes, flüssiges oder pulverförmiges Medium insbesondere unter Druck und bei hoher Temperatur aus einer formgebenden Öffnung herauspresst. Dabei lassen sich Verarbeitungsextruder und Aufbereitungsextruder unterscheiden. Ein Verarbeitungsextruder dient im wesentlichen der Formgebung, während ein Aufbereitungsextruder der chemischen und/oder physikalischen Modifizierung, beispielsweise der Mischung, Entgasung oder Untersuchung von Stoffen dient. Beide Arten von Extrudern sollen erfindungsgemäß mit umfasst sein.

Wie in den Druckschriften US4102 958 A, EP2266777 A1 und JP2002 361684 A offenbart, besitzt ein Extruder ein Extruder-Gehäuse, in dem ein Misch- oder Förderkanal für das zu fördernde und extrudierende Medium ausgebildet ist. In dem Förderkanal ist unter enger Passung zumindest eine Förderschnecke angeordnet, die drehangetrieben ist, wodurch das Medium längs des Förderkanals transportiert wird. Ein Extruder kann eine, zwei oder sogar mehrere Förderschnecken umfassen, die üblicherweise parallel zueinander angeordnet sind und je nach Art des Mediums und der Förderung entweder gleichsinnig oder gegensinnig angetrieben sind.

Während des Betriebes muss das Extruder-Gehäuse hinsichtlich seiner Temperatur geregelt und gekühlt und/oder geheizt werden. Zum Kühlen ist eine Kühlvorrichtung für das Extruder-Gehäuse vorgesehen, die das Extruder-Gehäuse zumindest abschnittsweise und insbesondere in mehreren getrennt regelbaren Abschnitten kühlt. Unter dem Begriff "kühlen" wird die Absenkung der Temperatur um zumindest eine geringe Temperaturdifferenz verstanden.

Eine bekannte Kühlvorrichtung umfasst einen Tank, in dem ein Kühlfluid, üblicherweise eine Kühlflüssigkeit, aufgenommen ist, die in bekannter Weise auf einer vorgegebenen Temperatur gehalten wird. Von dem Tank führt eine Zuführleitung zum Extruder-Gehäuse, in dem zumindest eine Kühlleitung ausgebildet ist. Von dem Extruder-Gehäuse führt eine Rückführleitung zurück zum Tank, wobei das Kühlfluid mittels einer Pumpe in einem Kühlkreislauf gefördert werden kann, der den Tank, die Zuführleitung, die Kühlleitung und die Rückfuhrleitung umfasst.

Um die einzelnen Betriebszustände des Extruders in gewünschter Weise steuern und/oder regeln zu können, ist eine Elektronik-Vorrichtung vorgesehen, die in einem Elektronik-Gehäuse aufgenommen ist. Die Elektronik-Vorrichtung kann bei längerem Betrieb überhitzen, weshalb es bekannt ist, die Elektronik-Vorrichtung ebenfalls zu kühlen. Zu diesem Zweck ist ein Ventilator vorgesehen, der die elektronischen Bauteile anbläst und somit mit Umgebungsluft beaufschlagt, wodurch Wärme abtransportiert wird. Alternativ oder zusätzlich dazu können an dem Elektronik-Gehäuse Kühlrippen üblichen Aufbaus vorgesehen sein. Die Kühlrippen bewirken, dass das Elektronik-Gehäuse eine große Oberfläche besitzt und somit überschüssige Wärme leichter abgibt. Obwohl eine derartige Kühlung der Elektronik-Vorrichtung in vielen Fällen ausreicht, ist damit das Problem verbunden, dass sie in hygienischer Hinsicht kritisch ist, was insbesondere bei Verwendung des Extruders in Räumen, in denen erhöhte hygienische Anforderungen bestehen, beispielsweise in der pharmazeutischen Industrie, zu Problemen führen kann. Mittels des Ventilators zur Kühlung der Elektronik-Vorrichtung werden Verunreinigungen großflächig in der Umgebung verteilt, was unhygienisch ist. In den Kühlrippen oder gleichartigen Luftschächten setzten sich im Laufe der Zeit Verunreinigungen ab, die zu Kontaminierungen führen können und aufwändig entfernt werden müssen.

Der Erfindung liegt die Aufgabe zugrunde, einen Extruder der genannten Art zu schaffen, der erhöhten hygienischen Anforderungen genügt.

Diese Aufgabe wird erfindungsgemäß durch einen Extruder mit den Merkmalen des Anspruchs 1 gelöst. Dabei ist vorgesehen, dass das Elektronik-Gehäuse mittels der Kühlvorrichtung, die der Kühlung des Extruder-Gehäuses dient, kühlbar ist. Erfindungsgemäß wird von der Grundüberlegung ausgegangen, die Kühlung des Elektronik-Gehäuses und damit der Elektronik-Vorrichtung ebenfalls mit derjenigen Kühlvorrichtung auszuführen, die für die Kühlung des Extruder-Gehäuses vorgesehen ist. Auf diese Weise kann auf Ventilatoren, die die Elektronik-Vorrichtung mit einem Luftstrom von Umgebungsluft beaufschlagen und auf äußere Kühlrippen verzichtet werden, so dass die Gefahr von in hygienischer Hinsicht kritischen Zuständen des Extruders vermieden ist.

In Weiterbildung der Erfindung kann vorgesehen sein, dass die Kühlvorrichtung einen Vorrat für das Kühlfluid, eine vom Vorrat zur Kühlleitung führende Zuführleitung, eine von der Kühlleitung zum Vorrat führende Rückführleitung und eine Pumpe aufweist. Alternativ ist es jedoch auch möglich, das Kühlfluid von der Kühlleitung nicht zum Vorrat zurückzuführen, sondern abzuleiten, d.h. an die Umgebung abzugeben oder abfließen zu lasen, so dass kein Kühlfluid-Kreislauf, sondern ein Kühlfluid-Durchlauf gegeben ist.

Die Erfindung sieht vor, dass die Zuführleitung und/oder die Rückführleitung durch einen Bauteil verlaufen, das zumindest einen Abschnitt des Elektronik-Gehäuses bildet oder mit dem Elektronik-Gehäuse in unmittelbarem Kontakt steht. Indem die Zuführleitung und/oder die Rückführleitung durch das Bauteil verlaufen, wird auch das Bauteil gegenüber der Umgebungstemperatur gekühlt. Wenn das Bauteil einen Abschnitt des Elektronik-Gehäuses bildet, ist dadurch erreicht, dass auch das Elektronik-Gehäuse gekühlt ist.

Alternativ ist es möglich, das Elektronik-Gehäuse in wärmetechnischer Hinsicht mit dem Bauteil zu verbinden, wodurch das gekühlte Bauteil einen Einfluss auf die Temperatur des Elektronik-Gehäuses hat und dieses kühlt. Es hat sich gezeigt, dass es auf diese Weise möglich ist, das Elektronik-Gehäuse und damit auch die Elektronik-Vorrichtung über einen langen Zeitraum im Bereich einer gewünschten Betriebstemperatur zu halten. Dabei ist es möglich, dass der Extruder mit dem Elektronik-Gehäuse in einem anderen Raum als der Vorrat für das Kühlfluid und/oder die Pumpe angeordnet ist, was insbesondere bei Anwendungen in der pharmazeutischen Produktion beispielsweise in Reinräumen gewünscht ist.

Als Kühlfluid wird eine Kühlflüssigkeit beispielsweise Wasser, oder ein Gas, insbesondere Luft, verwendet. Die Zuführung des Kühlfluids zum Extrudergehäuse oder zum Bauteil und die Abführung des Kühlfluids kann in einem einheitlichen Kühlkreislauf erfolgen. Es ist jedoch auch möglich, dafür zwei hintereinander geschaltete Kühlkreisläufe vorzusehen, wobei der Wärme- bzw. Kälteübergang zwischen den beiden Kühlkreisläufen mittels eines Wärmetauschers erfolgt.

Um den Wärmeübergang zwischen dem gekühlten Bauteil und dem die Elektronik-Vorrichtung aufnehmenden Innenraum des Elektronik-Gehäuses zu verbessern, kann in Weiterbildung der Erfindung vorgesehen sein, dass das Bauteil Vorsprünge und insbesondere Kühlrippen aufweist, die in den Innenraum des Elektronik-Gehäuses hineinragen. Diese Vorsprünge oder Kühlrippen können nicht verschmutzen, da sie in dem Innenraum des Elektronik-Gehäuses angeordnet sind, der vorzugsweise gegenüber der Umgebung vollständig gekapselt ist.

Das Extruder-Gehäuse kann auf einem Gestellteil oder einem Lagerteil lösbar befestigt sein, so dass es ausgewechselt werden kann. In bevorzugter Ausgestaltung der Erfindung ist vorgesehen, dass das gekühlte Bauteil ein das Extruder-Gehäuse lagerndes Lagerteil ist.

In Weiterbildung der Erfindung kann vorgesehen sein, dass der die Elektronik-Vorrichtung aufnehmende Innenraum des Elek-tronik-Gehäuses gegenüber der Umgebung weitestgehend abgedichtet und insbesondere vollständig gekapselt ist. Auf diese Weise ist zuverlässig vermieden, dass Verunreinigungen in das Elektronik-Gehäuse eintreten können. Ferner ist es möglich, dass Elektronik-Gehäuse zu Reinigungszwecken mit einer Reinigungsflüssigkeit abzuspritzen, ohne dass die Gefahr der Beschädigung der Elektronik besteht.

In dem Elektronik-Gehäuse kann ein Ventilator angeordnet sein. Dieser dient allein dazu, die Luft innerhalb des Elektronik-Gehäuses umzuwälzen, ohne dass ein Luftaustausch mit der umgebenden Atmosphäre stattfindet.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine schematische Darstellung eines Extruders mit einer Kühlvorrichtung gemäß einem 1. Ausführungsbeispiel und
- Fig. 2: eine schematische Darstellung eines Extruders mit einer Kühlvorrichtung gemäß einem 2. Ausführungsbeispiel.

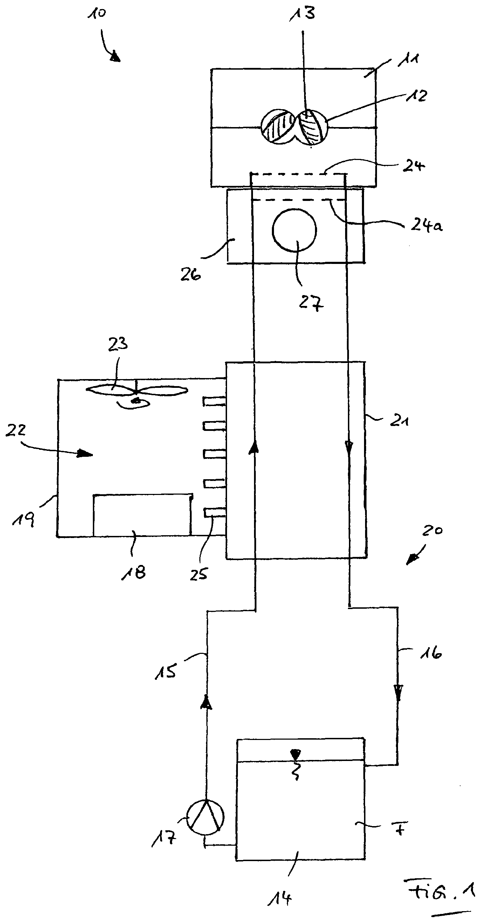

In Figur 1 ist nur schematisch ein Extruder 10 dargestellt, der ein Extruder-Gehäuse 11 besitzt, in dem ein Förderkanal 12 ausgebildet ist. In dem Förderkanal 12 sind zwei sich senkrecht zur Zeichenebene erstreckende Förderschnecken 13 angeordnet. Das Extruder-Gehäuse 11 ist auf ein Lagerteil 26 aufgesetzt und auf diesem in nicht dargestellter Weise lösbar befestigt. In dem Lagerteil 21 ist eine nur schematisch dargestellte elektrische Heizvorrichtung 27 angeordnet, mit der das Extruder-Gehäuse 11 heizbar ist.

Unabhängig von dem Lagerteil 26 und vorzugsweise mit Abstand zu diesem ist ein weiteres Bauteil 21 angeordnet, bei dem es sich beispielsweise um einen weiteren Lagerblock handeln kann.

Eine Kühlvorrichtung 20 für das Extruder-Gehäuse 11 umfasst einen Vorrat 14 beispielsweise einen Tank für ein Kühlfluid F, von dem eine Zuführleitung 15 durch das Bauteil 21 und durch das Lagerteil 26 bis in das Extruder-Gehäuse 11 verläuft, dort in eine Kühlleitung 24 übergeht, an die sich eine Rückführleitung 16 anschließt, die ebenfalls durch das Lagerteil 26 und durch das Bauteil 21 verläuft und wieder im Vorrat 14 mündet. Alternativ oder zusätzlich dazu kann in dem Lagerteil 26 unmittelbar unterhalb des Extruder-Gehäuses 11 eine Kühlleitung 24a ausgebildet sein, die von dem Kühlfluid durchströmt ist. In der Zuführleitung 15 ist eine Pumpe angeordnet, mittels der das Kühlfluid F in der Zuführleitung 15 zum Extruder 11, durch die dortige Kühlleitung 24 bzw. 24a und in der Rückführleitung 16 zurück zum Vorrat 14 befördert werden kann. Mittels der Kühlvorrichtung 20 ist es möglich, die Temperatur des Extruder-Gehäuses 11 in gewünschter Weise einzustellen und zu beeinflussen.

Eine die Betriebszustände des Extruders 11 steuernde oder regelnde Elektronik-Vorrichtung 18 ist in einem Innenraum 22 eines Elektronik-Gehäuses 19 aufgenommen, das gegenüber der umgebenden Atmosphäre gekapselt ist. Das Bauteil 21, das von der Zuführleitung 15 und der Rückführleitung 16 durchdrungen ist, bildet im dargestellten Ausführungsbeispiel eine Wandung des Elektronik-Gehäuses 19 und besitzt Vorsprünge in Form von Kühlrippen 25, die in den Innenraum 22 des Elektronik-Gehäuses hineinragen. Innerhalb des Innenraums 22 ist ein drehangetriebener Ventilator 23 vorgesehen, mittels dem die Luft in dem Innenraum 22 des Elektronik-Gehäuses 19 umgewälzt werden kann, wobei jedoch vorzugsweise ein Luftaustausch mit der umgebenden Atmosphäre vollständig vermieden ist.

Wenn das Extruder-Gehäuse 11 gekühlt wird, strömt das Kühlfluid F durch die Zuführleitung 15 und durch die Rückführleitung 16. Auf diese Weise werden auch das Bauteil 21 und das Lagerteil 26 gekühlt. Da das Bauteil 21 ein Teil des Elektronik-Gehäuses 19 ist, wird auch dieses in gewünschter Weise gekühlt, wobei der Wärmeaustausch zu dem Innenraum 22 des Elektronik-Gehäuses 19 über die Kühlrippen 25 verbessert ist.

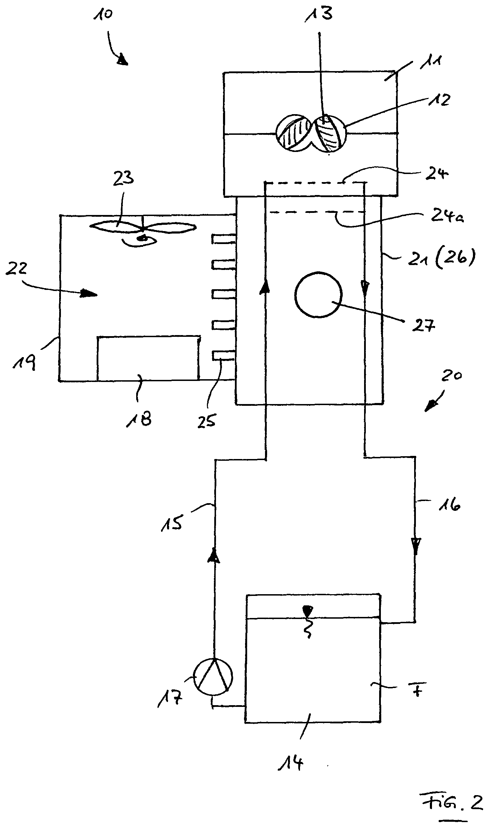

Figur 2 zeigt einen alternative Ausgestaltung des Extruders, wobei der Exruder 11 und dessen Kühlvorrichtung 20 den grundsätzlich gleichen Aufbau wie im Ausführungsbeispiel gemäß Figur 1 aufweisen. Bei dem Ausführungsbeispiel gemäß Figur 2 bildet das Bauteil 21, an dass das Elektronik-Gehäuse 19 angeschlossen ist, gleichzeitig auch das Lagerteil 26, auf das der Extruder 11 aufgelagert ist, d.h. das Bauteil 21 und das Lagerteil 26 sind zusammengefasst und nur von einem einzigen Teil gebildet.

Auch hierbei ist das Elektronik-Gehäuse 19 gegenüber der Umgebung vorzugsweise vollständig gekapselt und weist in dem Innenraum 22 einen Ventilator 23 auf.

## Patentansprüche

1. Extruder mit einem Extruder-Gehäuse (11), in dem ein Förderkanal (12) für ein zu extrudierendes Medium ausgebildet ist, in dem zumindest eine Förderschnecke (13) angeordnet ist, mit einer Kühlvorrichtung (20) für das Extruder-Gehäuse (11), die zumindest eine im oder am Extruder-Gehäuse (11) ausgebildete Kühlleitung (24, 24a) aufweist, die mit einer Zuführleitung (15) und einer Rückführleitung (16) verbunden und von einer Kühlflüssigkeit (F) durchströmt ist, und mit einer Elektronik-Vorrichtung (18) zur Steuerung und/oder Regelung der Betriebszustände des Extruders (10), die in einem Elektronik-Gehäuse (19) aufgenommen ist, wobei das Elektronik-Gehäuse (19) mittels der Kühlvorrichtung (20) für das Extruder-Gehäuse (11) kühlbar ist, **dadurch gekennzeichnet, daß** die Zuführleitung (15) und/oder die Rückführleitung (16) durch ein Bauteil (21) verlaufen, das zumindest einen Abschnitt des Elektronik-Gehäuses (19) bildet oder mit dem Elektronik-Gehäuse (19) in unmittelbarem Kontakt steht, so dass das Bauteil (21) gegenüber der Umgebungstemperatur gekühlt ist und dass das Bauteil (21) Vorsprünge oder Kühlrippen (25) aufweist, die in einen die Elektronik-Vorrichtung (18) aufnehmenden Innenraum (22) des Elektronik-Gehäuses (19) hineinragen.

2. Extruder nach Anspruch 1, **dadurch gekennzeichnet, dass** die Kühlvorrichtung (20) einen Vorrat (14) für die Kühlflüssigkeit (F), die vom Vorrat (14) zur Kühlleitung (24, 24a) führende Zuführleitung (15), die von der Kühlleitung (24, 24a) zum Vorrat (14) führende Rückführleitung (16) und eine Pumpe (17) aufweist.

3. Extruder nach einem der Ansprüche 1 und 2, **dadurch gekennzeichnet, dass** das Bauteil (21) ein das Extruder-Gehäuse (19) lagerndes Lagerteil (26) ist.

4. Extruder nach einem der Ansprüche 1 bis 3, **dadurch gekennzeichnet, dass** der Innenraum (22) des Elektronik-Gehäuses (19) gegenüber der Umgebung weitestgehend abgedichtet und vorzugsweise vollständig gekapselt ist.

5. Extruder nach einem der Ansprüche 1 bis 4, **dadurch gekennzeichnet, dass** in dem Elektronik-Gehäuse (19) ein Ventilator (23) angeordnet ist.

## Claims

1. An extruder comprising an extruder housing (11), in which is configured a feed channel (12) for a medium to be extruded, which feed channel has at least one screw conveyor (13) arranged therein, comprising a cooling device (20) for the extruder housing (11), which cooling device has at least one cooling line (24, 24a), configured in or on the extruder housing (11) and connected with a supply line (15) and a return line (16) and is flowed through by a cooling fluid (F), and comprising an electronics device (18), accommodated in an electronics housing (19), for controlling and/or regulating the operating states of the extruder (10), wherein the electronics housing (19) can be cooled by means of the cooling device (20) for the extruder housing (11), **characterized in that** the supply line (15) and/or the return line (16) run through a component (21) which forms at least one section of the electronics housing (19) or is in direct contact with the electronics housing (19) so that the component (21) is cooled in relation to the ambient temperature, and that the component (21) has projections or cooling ribs (25), which project into an interior (22), accommodating the electronics device (18), of the electronics housing (19).

2. The extruder as claimed in claim 1, **characterized in that** the cooling device (20) has a store (14) for the cooling fluid (F), the supply line (15) leading from the store (14) to the cooling line (24, 24a), the return line (16) leading from the cooling line (24, 24a) to the store (14), and a pump (17).

3. The extruder as claimed in claim 1 and 2, **characterized in that** the component (21) is a bearing part (26) supporting the extruder housing (19).

4. The extruder as claimed in one of claims 1 to 3, **characterized in that** the interior (22) of the electronics housing (19) is as far as possible sealed off and, preferably, fully encapsulated from the environment.

5. The extruder as claimed in one of claims 1 to 4, **characterized in that** a fan (23) is arranged in the electronics housing (19).

## Revendications

1. Extrudeuse avec un boîtier d'extrudeuse (11), dans lequel est réalisé un canal de transport (12) pour un milieu à extruder, dans lequel est disposé au moins un transporteur à vis (13), avec un dispositif de refroidissement (20) pour le boîtier d'extrudeuse (11), lequel présente au moins une conduite de refroidissement (24, 24a) réalisée dans ou sur le boîtier d'extrudeuse (11), laquelle est raccordée à une conduite d'alimentation (15) et à une conduite de retour (16) et est traversée par un liquide de refroidissement (F), et avec un dispositif électronique (18) destiné à commander et/ou à régler les états de fonctionnement de l'extrudeuse (10), lequel est logé dans un boîtier électronique (19), le boîtier électronique (19) pouvant être refroidi au moyen du dispositif de refroidissement (20) pour le boîtier d'extrudeuse (11), **caractérisée en ce que**
la conduite d'alimentation (15) et/ou la
conduite de retour (16) s'étendent à travers un élément structural (21) qui forme au moins une section du boîtier électronique (19) ou qui est en contact direct avec le boîtier électronique (19),
de sorte que l'élément structural (21) est refroidi par rapport à la température ambiante et que l'élément structural (21) présente
des saillies ou des ailettes de refroidissement (25) qui font saillie dans un espace interne (22) du boîtier électronique (19) où est logé le dispositif électronique (18).

2. Extrudeuse selon la revendication 1, **caractérisée en ce que** le dispositif de refroidissement (20) présente un réservoir (14) pour le liquide de refroidissement (F), la conduite d'alimentation (15) menant du réservoir (14) à la conduite de refroidissement (24, 24a), la conduite de retour (16) menant de la conduite de refroidissement (24, 24a) au réservoir (14) et une pompe (17).

3. Extrudeuse selon l'une quelconque des revendications 1 et 2, **caractérisée en ce que** l'élément structural (21) est une pièce d'appui (26) qui stocke le boîtier d'extrudeuse (19).

4. Extrudeuse selon l'une quelconque des revendications 1 à 3, **caractérisée en ce que** l'espace interne (22) du boîtier électronique (19) est largement étanche par rapport à l'environnement et est de préférence complètement encapsulé.

5. Extrudeuse selon l'une quelconque des revendications 1 à 4,
**caractérisée en ce qu'**un ventilateur (23) est disposé dans le boîtier électronique (19).
